# EUROPEAN PATENT SPECIFICATION

(11) **EP 0 440 424 B1**
(45) Date of publication and mention of the grant of the patent: **16.04.1997**
(21) Application number: 91300679.7
(22) Date of filing: 30.01.1991
(51) Int. Cl.: G11B 23/023

(54) **Cassette cases**
Kassettenbehälter
Boîtier pour cassette

(30) Priority: 31.01.1990 JP 8606/90
(43) Date of publication of application: 07.08.1991
(73) Proprietor: SONY CORPORATION, Tokyo 141 (JP)
(72) Inventor: Sato, Kiyoto, c/o Patents Division, Shinagawa-ku, Tokyo 141 (JP); Nakamaru, Kazuki, c/o Patents Division, Shinagawa-ku, Tokyo 141 (JP)
(74) Representative: Cotter, Ivan John

(56) References cited:
- FR-A- 2 079 394
- GB-A- 2 100 221
- US-A- 4 648 507
- US-A- 4 651 876

## Description

This invention relates to cassette cases.

In general, an audio cassette is accommodated in a plastics case when it is not in use.

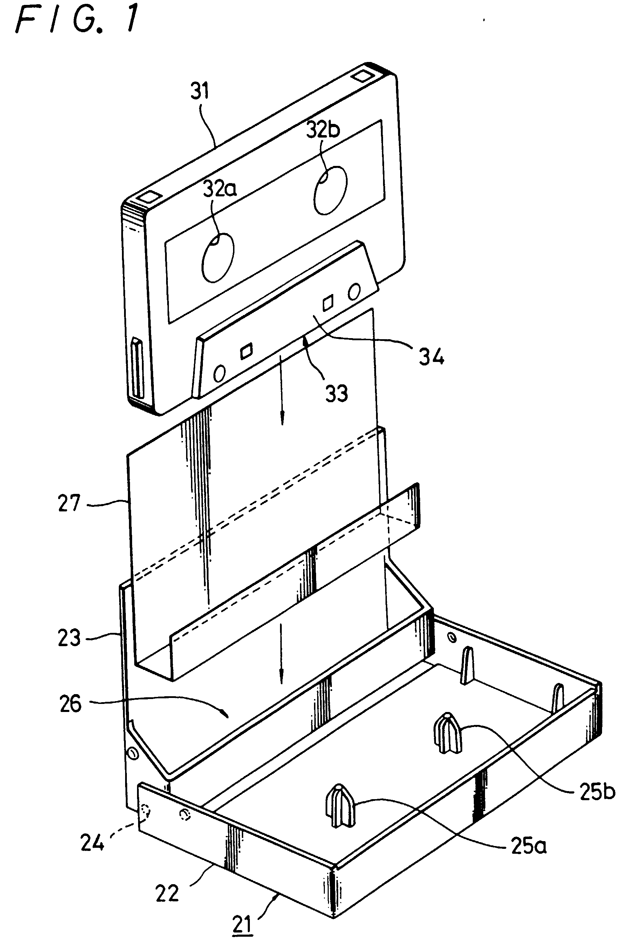

Figure 1 shows an example of such a cassette case 21 for accommodating therein a known audio compact cassette (hereinafter simply referred to as a tape cassette) 31. The cassette case 21 comprises a casing 22 and a lid 23 connected by a hinge 24, so that the cassette case 21 is freely openable and closable.

On the casing 22 there are formed engaging protrusions 25a, 25b to be inserted into reel shaft apertures 32a, 32b of the tape cassette 31 to prevent reel hubs (not shown) in the tape cassette 31 from being rotated inadvertently, while a cassette supporting portion 26 is provided on the lid 23.

The cassette supporting portion 26 is usually shaped as a pocket, so that, when the front end of the tape cassette 31 having a front opening 33 therein is inserted into the pocket, the tape cassette 31 is supported therein so as to be held against and rotated with the lid 23. Thus the tape cassette 31 can be loaded onto and/or unloaded from the cassette casing 22 with ease.

An index sheet 27 is used with the cassette case 21, and has a musical programme or the like written thereon. The index sheet 27 is inserted into the cassette case 21 so as to be sandwiched between the lid 23 and the tape cassette 31.

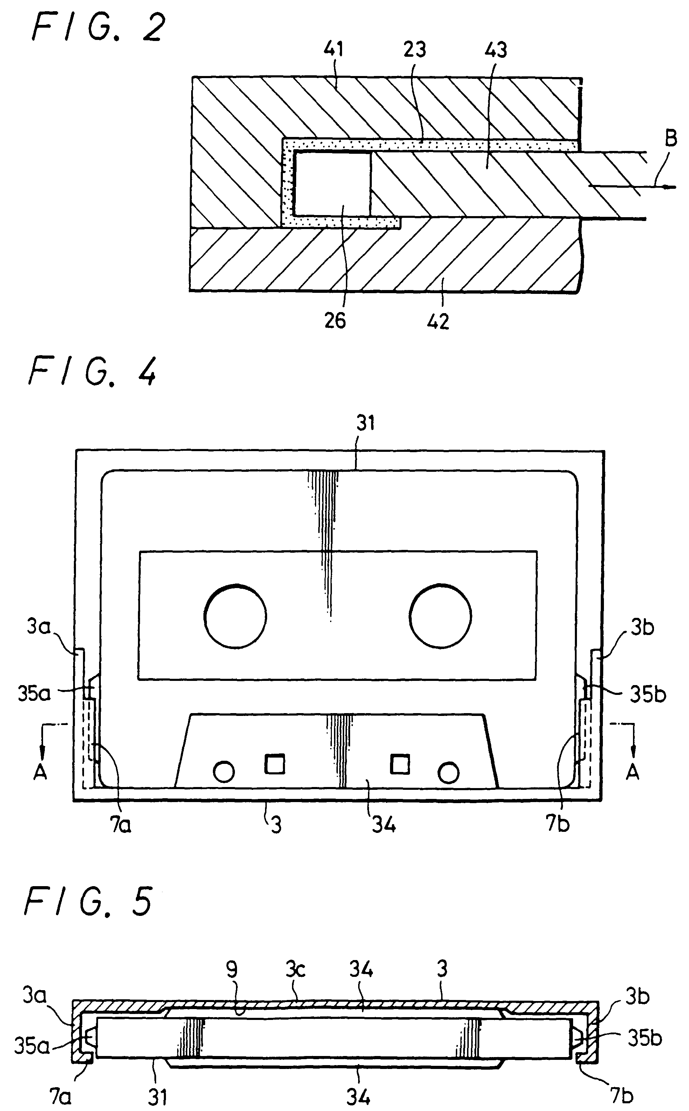

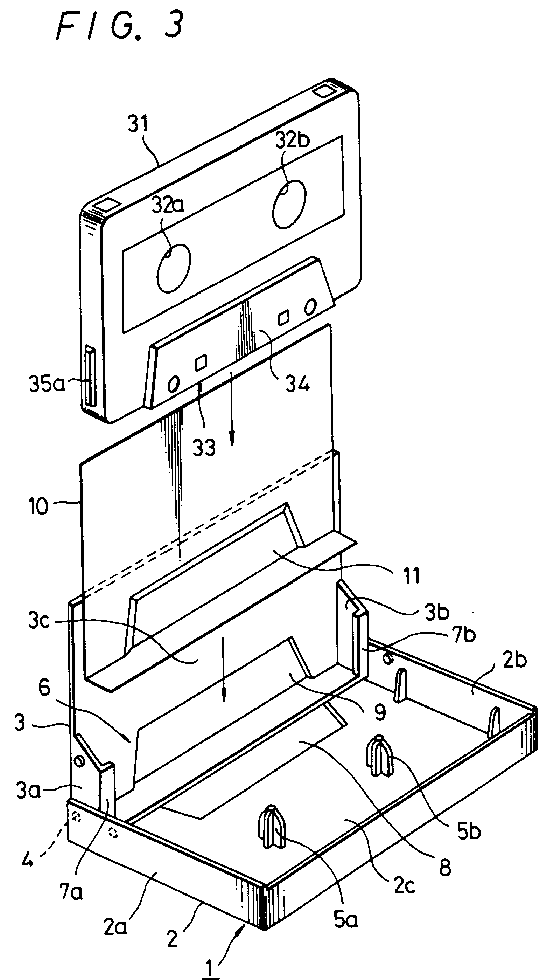

This cassette case 21 has the following problems:
1. Since the cassette supporting portion 26 of the lid 23 is shaped as a pocket and the front end of the tape cassette 31 is inserted therein, it is difficult to reduce the thickness of the cassette case 21. More specifically, since a trapezoidal-shaped thickened portion 34 is formed above and below the front opening 33 of the tape cassette 31, the cassette supporting portion 26 must have a width sufficient to receive the thickened portion 34. As a consequence, the overall thickness of the cassette case 21 cannot be reduced.
2. Defective mouldings tend to occur when moulding the lid 23. More specifically, when the lid 23 having the cassette supporting portion 26 is moulded, because of the configuration of the cassette supporting portion 26, it is necessary to use a metal mould apparatus whose cavity portion is formed by an upper mould 41, a lower mould 42 and a slide core 43 as shown in Figure 2. At the completion of the injection moulding process, the upper mould 41 and the lower mould 42 are opened in the vertical direction, and the slide core 43 is moved rearwardly in the lateral direction as shown by an arrow B, thereby to take out the moulded lid 23. However, when the slide core 43 is moved rearwardly in the direction shown by the arrow B, a vacuum condition temporarily prevails in the cassette supporting portion 26 with the result that the moulded lid 23, which is then not sufficiently cured, may be deformed.

Japanese laid-open utility model specification 60/163279 describes a cassette case which is intended to overcome problem 1 above. In this previously-proposed cassette case, recess portions are respectively formed in the lid and the cassette casing so as to accommodate therein the thickened portions of the tape cassette. However, in this cassette case, the cassette supporting portion of the lid is still pocket-shaped, so problem 2 above is not solved. Moreover, unavoidably, this cassette case is constructed such that the tape cassette is inserted into the cassette supporting portion of the lid from the direction opposite to the ordinary direction, that is, the tape cassette is inserted from its rear wall side (the side in which a mis-erase preventing tab is provided). Thus the front opening is exposed, and there is then the risk that the magnetic tape will be smudged by the fingers.

Moreover, in a cassette case having the recess portions in which the thickened portion of the tape cassette is accommodated, if an index sheet is inserted thereto, the index sheet hinders the thickened portions of the tape cassette from being accommodated in the recess portions.

Patent specification US-A-4 648 507 discloses a tape cassette storage case which includes recesses to accommodate a thicker portion of a tape cassette at a front end thereof but a rear end of the tape cassette is engaged in a pocket adjacent a hinge of the case which leaves a portion of the tape of the tape cassette exposed to contact with the user's fingers during a closing operation of the cassette case.

Patent specification GB-A-1 293 311 discloses a cassette storage case wherein wall portions of the case adjacent the hinge are made thinner by forming trapezoidal depressions therein to accommodate thicker portions of a cassette.

According to the present invention, there is provided a cassette case in which a lid is pivoted to a casing so as to be openable and closable about a hinge and a predetermined tape cassette can be accommodated in the cassette case, the cassette case having recess portions formed on the casing and the lid adjacent the hinge so as to accommodate therein a thickened portion of the tape cassette adjacent to a front opening of the tape cassette;
characterised by
engaging portions formed on the lid so as to come into engagement only with guiding protrusions provided on left and right side portions of the tape cassette, the tape cassette being restrained against the lid only by the engaging portions.

The invention will now be described by way of example with reference to the accompanying drawings, throughout which like parts are referred to by like references, and in which:
Figure 1 is a perspective view illustrating a known cassette case and an index sheet therefor;
Figure 2 is a schematic diagram to which reference is made in explaining a moulding process of a lid of the known cassette case;
Figure 3 is a perspective view of an embodiment of cassette case and an index sheet therefor according to the present invention;
Figure 4 is a front view of the lid of the cassette case of Figure 3; and
Figure 5 is a cross-sectional view on the line A - A in Figure 4.

The embodiment of a cassette case 1 shown in Figures 3 to 5 comprises a casing 2 forming the cassette case body, and a lid 3, connected by a hinge 4 so that the lid 3 is freely openable and closable. More specifically, shafts protruding from the inner surfaces of both left and right side walls 2a and 2b of the casing 2 are respectively engaged with shaft apertures formed in the outer surfaces of both left and right side walls 3a and 3b of the lid 3, to form the hinge 4.

Engaging protrusions 5a and 5b are formed on the casing 2 for insertion into reel shaft insertion apertures 32a and 32b of a tape cassette 31 thereby to prevent the reel hubs (not shown) of the tape cassette 31 from being rotated inadvertently. A cassette supporting portion 6 is provided on the lid 3 so as to support therein the tape cassette 31.

In the cassette case 1, the cassette supporting portion 6 is not formed as a pocket but it is constructed such that the tape cassette 31 is supported against the lid 3 by utilizing guiding protrusions 35a and 35b provided on respective side portions of the tape cassette 31. The guiding protrusions 35a and 35b are provided on the side walls of the tape cassette 31 in accordance with the standard for audio compact cassettes. In association therewith, in the cassette supporting portion 6 of this embodiment, engaging wall portions 7a and 7b are formed on the left and right side walls 3a and 3b of the lid 3 so as to protrude slightly inwardly from the top edges of the side walls 3a and 3b, so that, when the tape cassette 31 is inserted into the cassette supporting portion 6 with the front opening portion 33 leading, the engaging walls portions 7a and 7b receive the guiding protrusions 35a and 35b, thus urging the tape cassette 31 into engagement with the lid 3 (see Figures 4 and 5), and so that the tape cassette 31 is rotated in unison with the lid 3. Thus, the tape cassette 31 can be inserted into and taken out from the casing 2 with ease.

On main wall portions 2c and 3c of the casing 2 and the lid 3 facing the front and rear surfaces of the tape cassette 31, recess portions 8 and 9 are formed so as to accommodate therein a thickened portion 34 of trapezoidal configuration around the front opening 33 of the tape cassette 31. The recess portions 8 and 9 are formed in the inside portions of the casing 2 and the lid 3, that is, near the hinge 4, so that the thickened portion 34 can be accommodated within the recess portions 8 and 9 when the tape cassette 31 is inserted into the cassette supporting portion 6 of the lid 3 with the front opening 33 leading. The outer surfaces of the main wall portions 2c and 3c are flat.

With this arrangement, the cassette case 1 is thin, with the spacing between the main wall portions 2c and 3c when the lid is closed being slightly larger than the thickness of parts other than the thickened portion 34 of the tape cassette 31.

As seen in Figure 3, an index sheet 10 is inserted into the cassette case 1 to be sandwiched between the lid 3 and the tape cassette 31. The index sheet 10 has formed in its portion corresponding to the thickened portion 34 of the tape cassette 31 a recess-like portion 11 whose configuration matches that of the thickened portion 34. The recess-shaped portion 11 is formed on the index sheet 10 from the rear side of the index sheet 10, that is, from the tape cassette 31 side, by a press-treatment, with the result that a convex-shaped portion corresponding to the recess-shaped portion 11 is formed on the front surface of the index sheet 10.

Since the index sheet 10 is provided with the recess-shaped portion 11 corresponding to the recess portion 9 of the lid 3 as described above, the tape cassette 31 can be accommodated in the cassette case 1 without interference from the index sheet 10. Alternatively, the recess-shaped portion 11 may be simply cut away.

The casing 2 of the cassette case 1 is generally made of a transparent or opaque plastics material, the lid 3 is made of a transparent plastics material, and the index sheet 10 is made of paper having a predetermined stiffness. The index sheet 10 is not shown in Figures 4 and 5.

Therefore, the overall thickness of the cassette case 1 can be considerably reduced as compared with a standard cassette case. Moreover, problem 2 above does not occur in moulding.

Furthermore, the tape cassette 31 is inserted into the cassette supporting portion 6 with the rear surface portion of the tape cassette 31 exposed, similarly to the standard cassette case. There is then no risk that in the insertion of the tape cassette 31 into the cassette supporting portion 6 of the lid 3, the magnetic tape will be smudged with fingers.

In addition, since the index sheet 10 used in this cassette case 1 has the recess-shaped portion on its portion corresponding to the recess portion 9 of the lid 3, the thickened portion 34 of the tape cassette 31 can be accommodated into the recess portion 9 without being disturbed by the index sheet 10. Thus, the area of this index sheet can be made large enough to cover the tape cassette 31 similarly to the standard index sheet.

## Claims

1. A cassette case (1) in which a lid (3) is pivoted to a casing (2) so as to be openable and closable about a hinge (4) and a predetermined tape cassette (31) can be accommodated in the cassette case (1), the cassette case (1) having recess portions (8, 9) formed on the casing (2) and the lid (3) adjacent the hinge (4) so as to accommodate therein a thickened portion (34) of the tape cassette (31) adjacent to a front opening (33) of the tape cassette (31);
characterised by
engaging portions (7a, 7b) formed on the lid (3) so as to come into engagement only with guiding protrusions (35a, 35b) provided on left and right side portions of the tape cassette (31), the tape cassette (31) being restrained against the lid (3) only by the engaging portions (7a, 7b).

2. A cassette case (1) according to claim 1, wherein the recess portions (8, 9) are formed on the lid (3) and the casing (2) at positions adjacent to a hinge (4) connecting the lid (3) and the casing.

3. A cassette case (1) according to claim 1, wherein the engaging portions (7a, 7b) are formed on the lid (3) adjacent to a hinge (4).

4. A cassette case (1) according to claim 1, claim 2 or claim 3, wherein outer surfaces of main wall portions (2c, 3c) of the casing (2) and the lid (3) are flat, having no concavity or convexity.

5. A cassette case (1) according to claim 4, wherein the wall portions (2c, 3c) corresponding to the recess portions (8, 9) are thinner than the other portions of the main wall portions (2c, 3c).

## Patentansprüche

1. Kassettenbehälter (1), bei dem eine Klappe (3) drehbar an einem Gehäuse (2) gelagert ist, so daß dieses um ein Scharnier (4) geöffnet und geschlossen und eine vorgegebene Bandkassette (31) im Kassettenbehälter (1) untergebracht werden kann, wobei der Kassettenbehälter (1) Ausnehmungen (8, 9) hat, die im Gehäuse (2) und der Klappe (3) benachbart zum Scharnier (4) gebildet sind, um darin einen verdickten Bereich (34) der Bandkassette (31) benachbart zu einer Frontöffnung (33) der Bandkassette (31) unterzubringen;
**gekennzeichnet durch**
Einrückteile (7a, 7b), die auf der Klappe (3) gebildet sind, die in Eingriff nur mit Führungsansätzen (35a, 35b) kommen, die auf der linken und rechten Seite der Bandkassette (31) vorgesehen sind, wobei die Bandkassette (31) nur durch die Einrückteile (7a, 7b) gegenüber der Klappe (3) arretiert ist.

2. Kassettenbehälter (1) nach Anspruch 1, wobei die Ausnehmungen (8, 9) auf der Klappe (3) und dem Behälter (2) an Positionen benachbart zu einem Scharnier (4), welches die Klappe (3) und das Gehäuse verbindet, gebildet sind.

3. Kassettenbehälter (1) nach Anspruch 1, wobei die Einrückteile (7a, 7b) auf der Klappe (3) benachbart zu einem Scharnier (4) gebildet sind.

4. Kassettenbehälter (1) nach Anspruch 1, 2 oder 3, wobei Außenflächen der Hauptwandteile (2c, 3c) des Behälters (2) und der Klappe (3) flach sind, wobei diese keine Hohlrundung oder Ausbuchtung haben.

5. Kassettenbehälter (1) nach Anspruch 4, wobei die Wandteile (2c, 3c), die den Ausnehmungen (8, 9) entsprechen, dünner sind als die anderen Teile der Hauptwandteile (2c, 3c).

## Revendications

1. Boîte à cassette (1) dans laquelle un couvercle (3) est articulé sur un boîtier (2) de manière à pouvoir s'ouvrir et se fermer en tournant autour d'une charnière (4), et une cassette de bande (31) prédéterminée peut être logée dans la boîte à cassette (1), la boîte à cassette (1) ayant des parties en retrait (8, 9) formées sur le boîtier (2) et sur le couvercle (3) à proximité de la charnière (4) de façon à recevoir intérieurement une partie épaissie (34) de la cassette de bande (31) qui est adjacente à l'ouverture frontale (33) de la cassette de bande (31) ;
caractérisée par
des parties de prise (7a, 7b) formées sur le couvercle (3) de façon à entrer en prise uniquement avec des saillies de guidage (35a, 35b) prévues sur des parties latérales gauche et droite de la cassette de bande (31), la cassette de bande (31) n'étant retenue contre le couvercle (3) que par les parties de prise (7a, 7b).

2. Boîte à cassette (1) selon la revendication 1, dans laquelle les parties en retrait (8, 9) sont formées sur le couvercle (3) et le boîtier (2) dans des positions adjacentes à une charnière (4) qui relie le couvercle (3) au boîtier.

3. Boîte à cassette (1) selon la revendication 1, dans laquelle les parties de prise (7a, 7b) sont formées sur le couvercle (3) dans la région adjacente à une charnière (4).

4. Boîte à cassette (1) selon la revendication 1, la revendication 2 ou la revendication 3, dans laquelle les surfaces extérieures des parties de parois principales (2c, 3c) du boîtier (2) et du couvercle (3) sont plates, sans concavité ni convexité.

5. Boîte à cassette (1) selon la revendication 4, dans laquelle les parties de parois (2c, 3c) qui correspondent aux parties en retrait (8, 9) sont plus minces que les autres parties des parties de parois principales (2c, 3c).
